# EUROPEAN PATENT APPLICATION

(11) **EP 4 844 899 A1**
(43) Date of publication of application: **25.11.2026**
(21) Application number: 26175347.9
(22) Date of filing: 29.04.2026
(51) Int. Cl.: H01M 50/105, H01M 50/178, H01M 50/186, H01M 50/553

(54) **BATTERY CELL**

(30) Priority: 19.05.2025 JP 2025083452
(71) Applicant: Toyota Jidosha Kabushiki Kaisha, Toyota-shi, Aichi-ken 471-8571 (JP)
(72) Inventor: ONO, Masato, Toyota-shi, Aichi-ken 471-8571 (JP); SUGIHARA, Atsushi, Toyota-shi, Aichi-ken 471-8571 (JP); NAKASHIMA, Satoshi, Toyota-shi, Aichi-ken 471-8571 (JP); HAGA, Masayoshi, Toyota-shi, Aichi-ken 471-8571 (JP); IZUMI, Jun, Toyota-shi, Aichi-ken 471-8571 (JP); ISHIZUKA, Masahiro, Toyota-shi, Aichi-ken 471-8571 (JP); MIYAHARA, Kenta, Toyota-shi, Aichi-ken 471-8571 (JP)
(74) Representative: Winter, Brandl - Partnerschaft mbB

(57) **Abstract**

A battery cell (10) includes: a laminate body (22) having a structure in which a plurality of positive electrode sheets and a plurality of negative electrode sheets are alternately laminated, the laminate body (22) including a surface (22s1, 22s2) and a side surface (22a1, 22a2); a foil collection portion (24, 26) disposed on the side surface (22a1, 22a2), the foil collection portion (24, 26) being constituted such that the positive electrode sheets or the negative electrode sheets are bundled; and an outer package body (30) constituted by a film material wherein: the film material is provided with an opening (OP1, OP2); and the foil collection portion (24, 26) is exposed, at the opening (OP1, OP2), or the foil collection portion (24, 26) is electrically connected with an electric conductor member (41, 42), and the electric conductor member (41, 42) is exposed, at the opening (OP1, OP2).

## Description

### BACKGROUND OF THE INVENTION

### 1. Field of the Invention

A technology disclosed in the present specification relates to a battery cell.

### 2. Description of Related Art

In a battery cell disclosed in Japanese Unexamined Patent Application Publication No. 2020-68197 (JP 2020-68197 A), an outer package body that encases a power storage element is constituted by a film. Around the periphery of the power storage element, a seal portion where films are overlapped with each other is provided. At the seal portion, a weld portion where the films are welded to each other is provided. The weld portion is provided linearly along the seal portion. Since the films are welded to each other at the weld portion, the outer package body is sealed. Further, the battery cell includes an electrode plate connected to the power storage element. At the seal portion, the electrode plate is drawn out from the interior of the outer package body to the exterior of the outer package body, passing through the joined surfaces of the films.

### SUMMARY OF THE INVENTION

In the structure of the battery cell in JP 2020-68197 A, the electrode plate for outputting the voltage of the battery cell protrudes to the outside of the outer package body. The physical size of the battery cell is enlarged, and therefore, the energy density decreases. The present disclosure provides a technology for downsizing the battery cell.

A battery cell according to a first aspect of the present disclosure includes: a laminate body having a structure in which a plurality of positive electrode sheets and a plurality of negative electrode sheets are alternately laminated, the laminate body including a surface in a lamination direction and a side surface in a direction crossing the lamination direction; a foil collection portion disposed on the side surface, the foil collection portion being constituted such that the positive electrode sheets or the negative electrode sheets are bundled; and an outer package body constituted by a film material and housing the laminate body and the foil collection portion, wherein: the film material that constitutes the outer package body is provided with an opening at a position that faces the side surface of the laminate body; and the foil collection portion is exposed to an exterior, at the opening, or the foil collection portion is electrically connected with an electric conductor member, and the electric conductor member is exposed to the exterior, at the opening.

In the above structure, the film material that constitutes the outer package body is provided with the opening. Moreover, the foil collection portion or the electric conductor member is exposed at the opening, and therefore, the voltage of the battery cell can be output. Thereby, a structure for outputting the voltage of the battery cell can be configured so as not to protrude to the outside of the outer package body. The battery cell can be downsized.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a battery cell 10 in an embodiment 1;
FIG. 2 is a top view of the battery cell 10 in the embodiment 1;
FIG. 3 is a partial sectional view along line III-III in FIG. 2;
FIG. 4 is a partial sectional view along line IV-IV in FIG. 2;
FIG. 5 is a sectional view before sealing of an outer package body;
FIG. 6 is a sectional view of a battery cell in a comparative example and corresponds to FIG. 3;
FIG. 7 is a partial sectional view of a battery cell 10 in a modification of the embodiment 1;
FIG. 8 is a partial sectional view of a battery cell 10 in an embodiment 2;
FIG. 9 is a partial sectional view of a battery cell 10 in a modification of the embodiment 2;
FIG. 10 is a perspective view of a battery cell 10 in an embodiment 3;
FIG. 11 is a partial sectional view of the battery cell 10 in the embodiment 3; and
FIG. 12 is a partial sectional view of a battery cell 10 in a modification of the embodiment 3.

### DETAILED DESCRIPTION OF EMBODIMENTS

In the battery cell in the above aspect, the outer package body may include a seal portion at a position that faces the side surface of the laminate body, the seal portion being constituted such that two peripheral edge portions of the film material are joined to each other, and the opening may be positioned at the seal portion.

In this configuration, the structure for outputting the voltage of the battery cell can be disposed at the seal portion.

In the battery cell according to the above aspect, the seal portion may extend in the direction crossing the lamination direction, and the opening may be positioned at one of the two peripheral edge portions that constitute the seal portion.

In the battery cell in the above aspect, the seal portion may be folded so as to extend along the side surface of the laminate body, the seal portion may include a first surface that faces the side surface and a second surface that is positioned on a side opposite to the first surface, and the opening may be positioned at the second surface of the seal portion.

In this configuration, the dimension of the battery cell in the lateral direction of the battery cell can be further reduced.

In the battery cell in the above aspect, the foil collection portion may be exposed to the exterior, at the opening.

In this configuration, the foil collection portion can function also as an electrode pad for the electric connection with the exterior. It is possible to achieve the downsizing and cost reduction of the battery cell.

In the battery cell in the above aspect, the battery cell may include an electrode portion as the electric conductor member, the electrode portion being electrically connected with the foil collection portion, a part of the electrode portion being exposed to the exterior from the opening of the outer package body.

In this configuration, it is possible to enhance the strength and reliability of the site for the electric connection with the exterior.

In the battery cell in the above aspect, the outer package body may be provided with a weld region that is disposed so as to surround a periphery of the opening, and at the weld region, the outer package body and the foil collection portion may be welded, or the outer package body and the electric conductor member may be welded.

In this configuration, the opening can be sealed.

### Embodiment 1

### Structure of Battery Cell 10

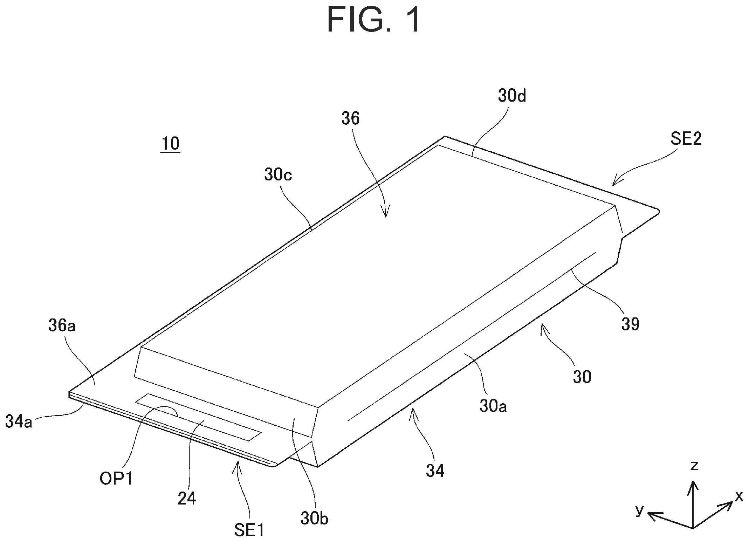

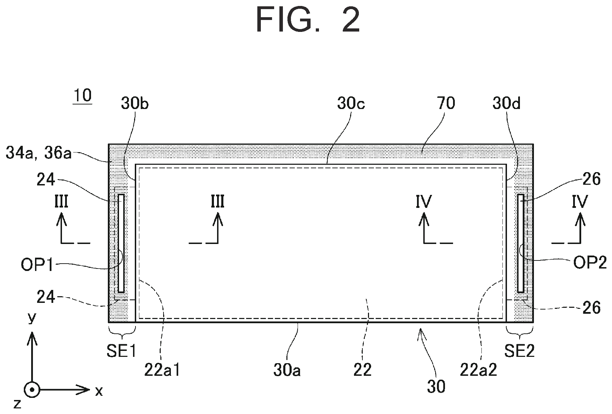

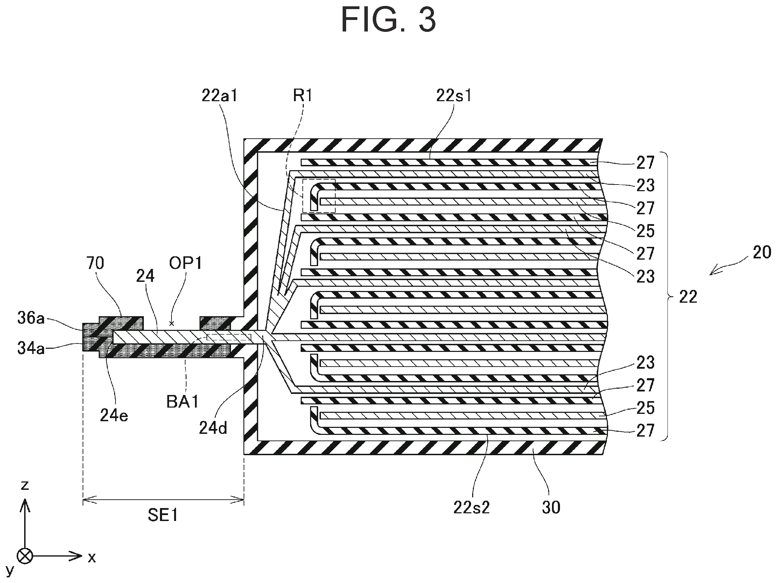

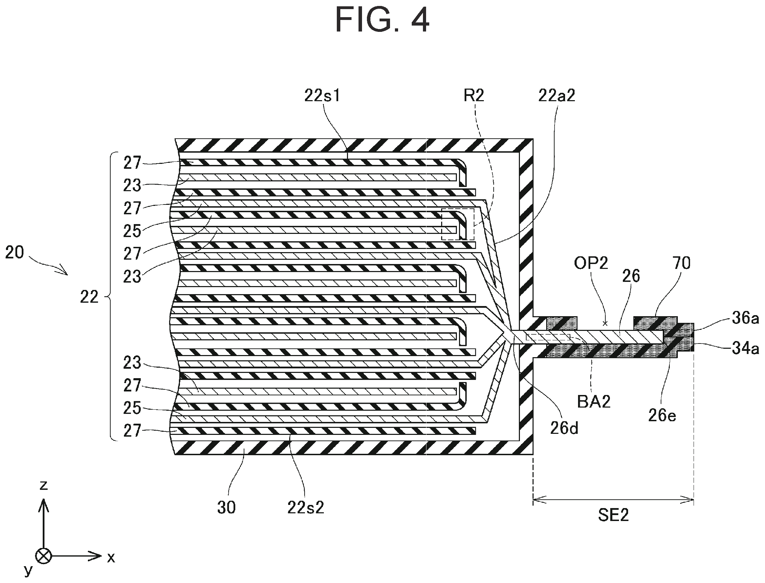

FIG. 1 is a perspective view of a battery cell 10 in an embodiment 1. FIG. 2 shows a top view of the battery cell 10 in the embodiment 1. FIG. 3 is a partial sectional view along line III-III in FIG. 2. FIG. 3 is a sectional view of an end portion on a -x-directional side of the battery cell 10. FIG. 4 is a partial sectional view along line IV-IV in FIG. 2. FIG. 4 is a sectional view of an end portion on a +x-directional side of the battery cell 10. In FIG. 1 to FIG. 4, the thickness direction of the battery cell 10 is referred to as a z-direction, the longer direction of the battery cell 10 is referred to as an x-direction, and the direction orthogonal to the z-direction and the x-direction is referred to as a y-direction. As for members that are repeatedly disposed, one representative member of the members is sometimes denoted by a reference character. The same goes for the other figures.

As shown in FIG. 1, the battery cell 10 in the embodiment has a rectangular flat-plate shape. At the time of use of the battery cell 10, a plurality of battery cells 10 is laminated in the z-direction, so that a battery module is constituted.

As shown in FIG. 2, the battery cell 10 mainly includes an outer package body 30, an electrode laminate body 22, a first foil collection portion 24, and a second foil collection portion 26. In FIG. 2, the electrode laminate body 22, the first foil collection portion 24, and the second foil collection portion 26 are housed in the interior of the outer package body 30 are shown by dotted lines. The electrode laminate body 22 includes a first side surface 22a1 and a second side surface 22a2. The first foil collection portion 24 protrudes from the first side surface 22a1 in the -x-direction. The second foil collection portion 26 protrudes from the second side surface 22a2 in the +x-direction. Specific structures of the electrode laminate body 22, the first foil collection portion 24, and the second foil collection portion 26 will be described later.

The outer package body 30 includes side surfaces 30a to 30d. The side surfaces 30a, 30c are side surfaces along the x-direction. The side surfaces 30b, 30d are side surfaces along the y-direction. Further, the outer package body 30 includes a frame portion 36a and a frame portion 34a. A weld portion 70 is provided at a portion where the frame portion 36a and the frame portion 34a are overlapped. In FIG. 2 to FIG. 4, the weld portion 70 is shown by dot hatching. The weld portion 70 is a region where the frame portion 34a and the frame portion 36a are welded to each other by heat welding. The outer package body 30 is sealed by the weld portion 70.

As shown in FIG. 2 and FIG. 3, the outer package body 30 includes a first seal portion SE1. The first seal portion SE1 is a site constituted such that the frame portion 36a and the frame portion 34a are joined to each other, and is a site disposed at a position that faces the first side surface 22a1 of the electrode laminate body 22. At the first seal portion SE1, a first opening OP1 is provided on a film that constitutes the frame portion 36a of the outer package body 30. At the first opening OP1, the first foil collection portion 24 is exposed to the exterior.

Further, as shown in FIG. 2 and FIG. 4, the outer package body 30 includes a second seal portion SE2. The second seal portion SE2 is a site constituted such that the frame portion 36a and the frame portion 34a are joined to each other, and is a site disposed at a position that faces the second side surface 22a2 of the electrode laminate body 22. At the second seal portion SE2, a second opening OP2 is provided on the film that constitutes the frame portion 36a of the outer package body 30. At the second opening OP2, the second foil collection portion 26 is exposed to the exterior.

A power storage element 20 is a chargeable and dischargeable battery element, and outputs direct-current voltage. The power storage element 20 is immersed in an electrolytic solution with which the interior of the outer package body 30 is filled. As shown in FIG. 3 and FIG. 4, the power storage element 20 includes the electrode laminate body 22, the first foil collection portion 24, and the second foil collection portion 26. The electrode laminate body 22 is a laminate body in which a plurality of positive electrode current collection foils 23 and a plurality of negative electrode current collection foils 25 are alternately laminated with separators 27 therebetween. The positive electrode current collection foils 23, the negative electrode current collection foils 25, and the separators 27 are laminated in the z-direction.

As shown in FIG. 3, an end portion of the separator 27 in the -x-direction protrudes in the -x-direction, relative to an end portion of the negative electrode current collection foil 25 in the -x-direction. The end portion of the separator 27 in the -x-direction is folded so as to cover the end portion of the negative electrode current collection foil 25 in the -x-direction (see a region R1). Further, as shown in FIG. 4, an end portion of the separator 27 in the +x-direction protrudes in the +x-direction, relative to an end portion of the positive electrode current collection foil 23 in the +x-direction. The end portion of the separator 27 in the +x-direction is folded so as to cover the end portion of the positive electrode current collection foil 23 in the +x-direction (see a region R2). Thereby, by the separator 27, it is possible to surely prevent the short circuit between the positive electrode current collection foil 23 and the negative electrode current collection foil 25. The folding of the separator 27 may be performed concurrently when current collection foils are bundled for forming the first foil collection portion 24 and the second foil collection portion 26.

The electrode laminate body 22 includes a first surface 22s1, a second surface 22s2, the first side surface 22a1, and the second side surface 22a2. The first surface 22s1 is a surface on one side (+z-directional side) in the lamination direction. The second surface 22s2 is a surface on the other side (-z-directional side) in the lamination direction. The first side surface 22a1 is a side surface in a direction (-x-direction) crossing the lamination direction. The second side surface 22a2 is a side surface in the opposite direction (+x-direction) of the first side surface 22a1.

As shown in FIG. 3, the first foil collection portion 24 is a portion where the positive electrode current collection foils 23 are bundled. The first foil collection portion 24 is provided on the first side surface 22a1 of the electrode laminate body 22. Further, as shown in FIG. 4, the second foil collection portion 26 is a portion where the negative electrode current collection foils 25 are bundled. The second foil collection portion 26 is provided on the second side surface 22a2 of the electrode laminate body 22. In FIG. 3 and FIG. 4, a plurality of current collection foils in the bundled state is simplified and illustrated as a single current collection foil.

Specific structures of the first foil collection portion 24 and a vicinal region thereof will be described with use of FIG. 3. A base portion 24d of the first foil collection portion 24 is positioned on the first side surface 22a1. The first foil collection portion 24 protrudes from the base portion 24d in the -x-direction. A surface of the first foil collection portion 24 in the +z-direction is covered with the frame portion 36a. A surface of the first foil collection portion 24 in the -z-direction is covered with the frame portion 34a. An end portion 24e of the first foil collection portion 24 is covered with the frame portions 36a, 34a. At the first seal portion SE1, the first opening OP1 is provided at the frame portion 36a of the outer package body 30. The first opening OP1 is opened within a range in which the first foil collection portion 24 is disposed.

As shown in FIG. 2, the weld portion 70 extends across the first foil collection portion 24 in the y-direction, and overlaps with the first opening OP1. At a region in the weld portion 70 where the first foil collection portion 24 does not exist, the frame portion 34a is welded to the frame portion 36a. At a region in the weld portion 70 where the first foil collection portion 24 exists, the frame portion 34a is welded to a lower surface of the first foil collection portion 24, and the frame portion 36a is welded to an upper surface of the first foil collection portion 24. Further, the weld portion 70 is provided so as to surround the periphery of the first opening OP1. The first opening OP1 is sealed by the weld portion 70.

At the first foil collection portion 24, a foil joining region BA1 is provided. The foil joining region BA1 is provided in a range from the base portion 24d of the first foil collection portion 24 to the first opening OP1. Further, the foil joining region BA1 is provided over the whole length of the first foil collection portion 24 in the y-direction. The foil joining region BA1 is a region where the positive electrode current collection foils 23 are joined to each other. The foil joining may be performed in various ways, and for example, may be performed by laser joining or ultrasonic joining. By the foil joining region BA1, it is possible to enhance the seal property of the first foil collection portion 24. Consequently, it is possible to restrain the first opening OP1 from communicating with the interior of the outer package body 30.

Specific structures of the second foil collection portion 26 and a vicinal region thereof will be described with use of FIG. 4. The structure of the second foil collection portion 26 is roughly the same as the above-described structure of the first foil collection portion 24. Accordingly, only a portion unique to the second foil collection portion 26 will be described below. A base portion 26d of the second foil collection portion 26 is positioned on the second side surface 22a2. The second foil collection portion 26 protrudes from the base portion 26d in the +x-direction. At the second seal portion SE2, the second opening OP2 is provided at the frame portion 36a of the outer package body 30. The second opening OP2 is opened within a range in which the second foil collection portion 26 is disposed.

As shown in FIG. 2, the weld portion 70 extends across the second foil collection portion 26 in the y-direction, and overlaps with the second opening OP2. The second opening OP2 is sealed by the weld portion 70. Further, at the second foil collection portion 26, a foil joining region BA2 is provided. The foil joining region BA2 is provided in a range from the base portion 26d of the second foil collection portion 26 to the second opening OP2.

### Structure of Outer Package Body 30

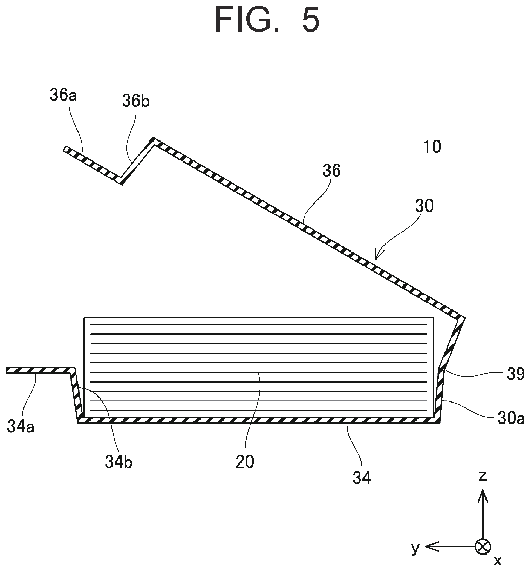

FIG. 5 is a sectional view of the battery cell 10 before the outer package body 30 is sealed. As shown in FIG. 5, the outer package body 30 is constituted by a thin film. The film that constitutes the outer package body 30 is a laminate film in which resin coating films are provided on both surfaces of an aluminum foil. The film that constitutes the outer package body 30 is formed in a container shape that has a bottom portion 34 and a lid portion 36, by embossing. On the side surface 30a of the outer package body 30, a fold line 39 is provided. The lid portion 36 can swing around the fold line 39 with respect to the bottom portion 34. The bottom portion 34 includes the frame portion 34a and a cup portion 34b. The cup portion 34b has a cup shape that includes a concave portion on an upper surface. The frame portion 34a is a planar portion that is provided at the periphery of the cup portion 34b. As shown in FIG. 1, the frame portion 34a is provided at the periphery of the cup portion 34b that is other than the side surface 30a.

As shown in FIG. 5, the power storage element 20 is disposed in the cup portion 34b. The lid portion 36 includes the frame portion 36a and a cap portion 36b. The cap portion 36b has a cap shape that includes a concave portion on a lower surface. The frame portion 36a is a planar portion that is provided at the periphery of the cap portion 36b. As shown in FIG. 1, the frame portion 36a is provided at the periphery of the cap portion 36b that is other than the side surface 30a. When the lid portion 36 is closed, an upper portion of the power storage element 20 is covered with the cap portion 36b. Further, when the lid portion 36 is closed, the frame portion 36a is laminated on the frame portion 34a as shown in FIG. 1.

### Effects

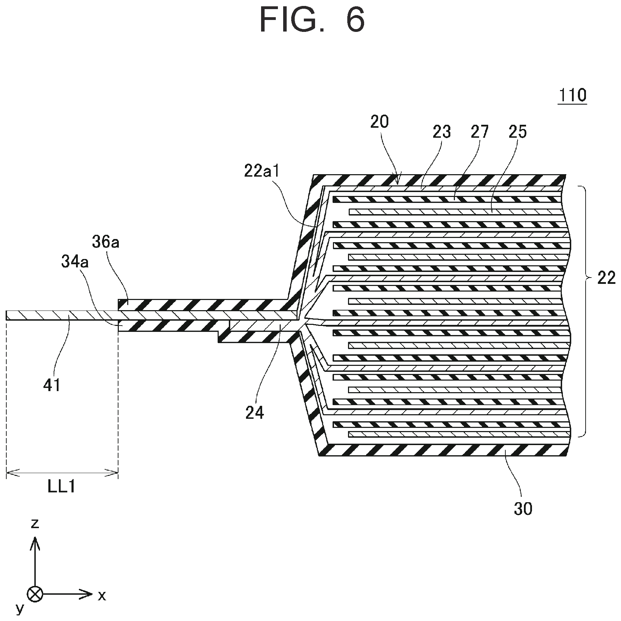

A problem will be described with a battery cell 110 in a comparative example in FIG. 6. FIG. 6 is a sectional view of the same site as the site in FIG. 3. Further, sites in common between the battery cell 110 (FIG. 6) in the comparative example and the battery cell 10 (FIG. 3) in the embodiment are denoted by identical reference characters. In the battery cell 110 in the comparative example, a first electrode portion 41 has a flat-plate shape that extends along the x-direction. The first electrode portion 41 passes through an interface between the frame portion 36a and the frame portion 34a, and protrudes from the interior of the outer package body 30 in the -x-direction. That is, the dimension of the battery cell 110 on the -x-directional side is increased by a length LL1 from an end portion of the outer package body 30 to a distal end of the first electrode portion 41. Further, in the battery cell 110 in the comparative example, a second electrode portion 42 (not illustrated) has a flat-plate shape that extends along the x-direction, and protrudes from the interior of the outer package body 30 in the +x-direction. Accordingly, the dimension of the battery cell 110 on the +x-directional side is increased.

In contrast, in the structure of the battery cell 10 in the embodiment, the first opening OP1 (FIG. 3) and the second opening OP2 (FIG. 4) are provided at the frame portion 36a that constitutes the outer package body 30. The first foil collection portion 24 is exposed in the first opening OP1, and the second foil collection portion 26 is exposed in the second opening OP2. Thereby, the voltage of the battery cell can be output through the first opening OP1 and the second opening OP2. Accordingly, the first electrode portion 41 and the second electrode portion 42 can be configured so as not to protrude from the first side surface 22a1 and the second side surface 22a2. In the battery cell 10 in the embodiment, the dimension in the x-direction (that is, the lateral direction) can be shortened compared to the battery cell 110 in the comparative example. Since the battery cell 10 can be downsized, the size of the battery module can be lessened when the battery module is constituted by the lamination of the battery cells 10. Accordingly, the battery module can store electric power at a high energy density.

In the structure of the battery cell 10 in the embodiment, the first foil collection portion 24 can function also as an electrode pad for the electric connection with the exterior. It is not necessary to separately include components for the electrode pad, and therefore, it is possible to achieve the downsizing and cost reduction of the battery cell 10. The second foil collection portion 26 can exert the same effect as the first foil collection portion 24.

### Modification of Embodiment 1

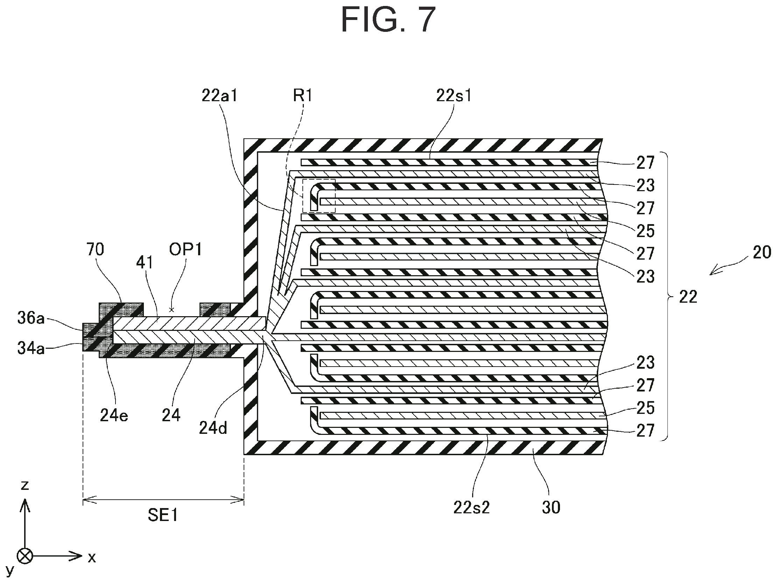

FIG. 7 shows a sectional view in a modification. FIG. 7 (modification) is different from FIG. 3 (embodiment 1) only in that a first electrode portion 41 is included. Only a portion unique to the modification will be described below.

The first electrode portion 41 is an electric conductor member that is electrically connected with the first foil collection portion 24. As the material of the first electrode portion 41, various materials may be adopted, and for example, a metal including aluminum and copper may be adopted. The first electrode portion 41 is disposed at the first seal portion SE1. The first electrode portion 41 is joined to the surface of the first foil collection portion 24 on the +z-directional side. The first electrode portion 41 extends along the first foil collection portion 24 in the +x-direction. At the first opening OP1, a part of the first electrode portion 41 is exposed to the exterior. At the weld portion 70, the frame portion 36a and an upper surface of the first electrode portion 41 are welded.

The second foil collection portion 26 can include a second electrode portion 42 (not illustrated) that has the same structure as the above-described first electrode portion 41.

An effect will be described. In the battery cell 10 in the modification, the first electrode portion 41 is electrically connected to the first foil collection portion 24. Moreover, the first electrode portion 41 is exposed to the exterior, from the first opening OP1. Thereby, the electric connection with the exterior can be performed by the first electrode portion 41. Moreover, the first electrode portion 41 is a member that has a higher mechanical strength than the first foil collection portion 24. Consequently, it is possible to enhance the strength and reliability of the site for the electric connection with the exterior. The second electrode portion 42 can exert the same effect.

### Embodiment 2

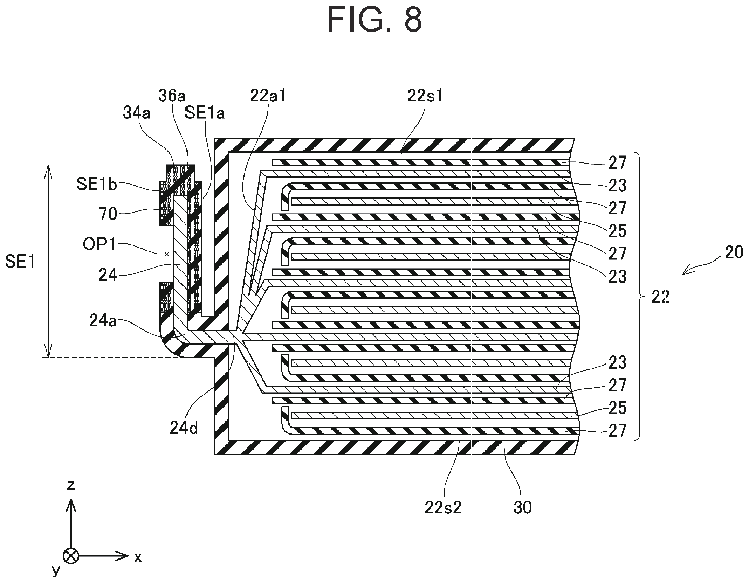

In an embodiment 2, a configuration in which the first foil collection portion 24 is folded will be described. Sites in common between the embodiment 1 and the embodiment 2 are denoted by identical reference characters, and descriptions thereof are omitted. FIG. 8 shows a sectional view in the embodiment 2. FIG. 8 (embodiment 2) shows a section of the same site as the site in FIG. 3 (embodiment 1). Only a portion unique to the embodiment 2 will be described below.

The first foil collection portion 24 includes a bend portion 24a. The bend portion 24a is a portion where the first foil collection portion 24 is folded along the y-direction. The first foil collection portion 24 is roughly orthogonally bent at the bend portion 24a. Therefore, on an xz-section, the first seal portion SE1 extends along the lamination direction (z-direction) of the electrode laminate body 22. That is, the first seal portion SE1 is folded so as to extend along the first side surface 22a1 of the electrode laminate body 22.

The first seal portion SE1 includes a first surface SE1a and a second surface SE1b. The first surface SE1a is a surface that faces the first side surface 22a1. The second surface SE1b is a surface that is positioned on a side opposite to the first surface SE1a. That is, the second surface SE1b is a surface that is exposed on the side surface of the outer package body 30. The frame portion 34a that constitutes the second surface SE1b is provided with the first opening OP1. At the first opening OP1, the first foil collection portion 24 is exposed to the exterior. The second seal portion SE2 can have the same structure as the above-described first seal portion SE1.

An effect will be described. In the battery cell 10 (FIG. 8) in the embodiment 2, it is possible to restrain the x-directional protrusion amount of the first seal portion SE1, compared to the battery cell 10 (FIG. 3) in the embodiment 1. Accordingly, the dimension in the x-direction (that is, the lateral direction) can be further reduced.

### Modification of Embodiment 2

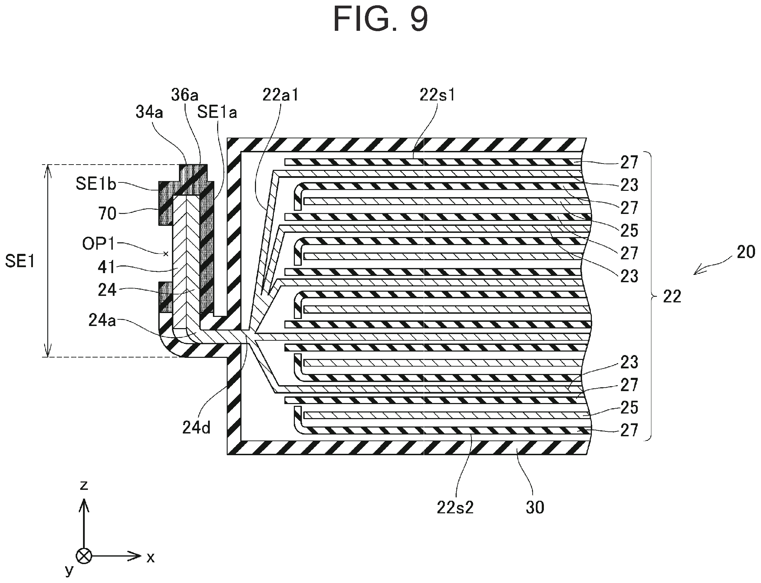

FIG. 9 shows a sectional view in a modification. FIG. 9 (modification) is different from FIG. 8 (embodiment 2) only in that a first electrode portion 41 is included. Only a portion unique to the modification will be described below. The first electrode portion 41 is disposed at the first seal portion SE1. The first electrode portion 41 is joined to the surface of the first foil collection portion 24 on the -x-directional side. The first electrode portion 41 extends along the first foil collection portion 24 in the +z-direction. At the first opening OP1, a part of the first electrode portion 41 is exposed to the exterior. The second foil collection portion 26 can include a second electrode portion 42 (not illustrated) that has the same structure as the above-described first electrode portion 41.

An effect will be described. In the battery cell 10 in the modification, the electric connection with the exterior can be performed by the first electrode portion 41. Consequently, it is possible to enhance the strength and reliability of the site for the electric connection with the exterior. The second electrode portion 42 can exert the same effect.

### Embodiment 3

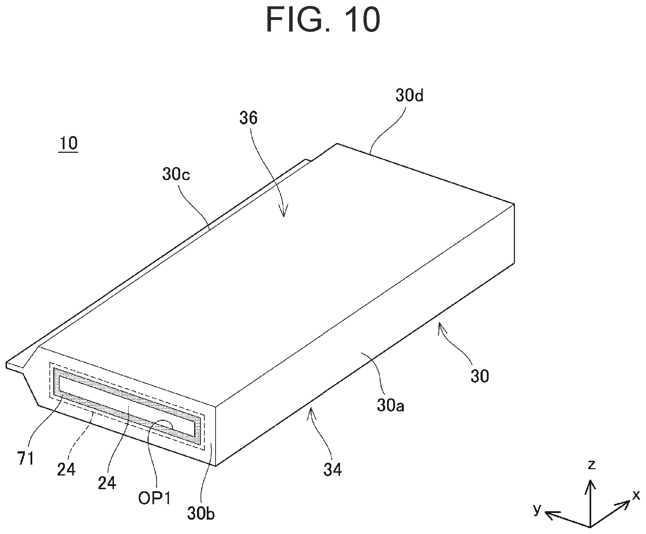

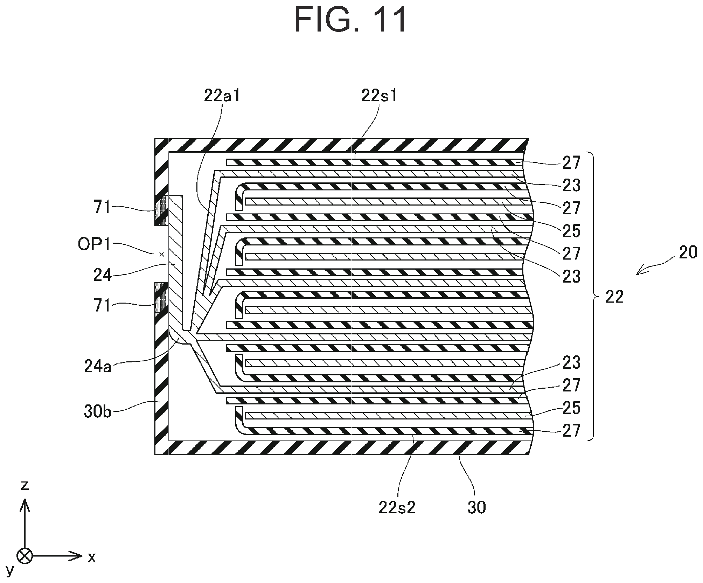

In an embodiment 3, a configuration in which the first opening OP1 is provided on the side surface of the outer package body 30 will be described. Sites in common between the embodiment 1 and the embodiment 3 are denoted by identical reference characters, and descriptions thereof are omitted. FIG. 10 shows a perspective view of a battery cell 10 in the embodiment 3. Further, FIG. 11 shows a sectional view in the embodiment 3. FIG. 11 (embodiment 3) shows a section of the same site as the site in FIG. 3 (embodiment 1). Only a portion unique to the embodiment 3 will be described below.

The first foil collection portion 24 includes a bend portion 24a. The bend portion 24a is a portion where the first foil collection portion 24 is folded along the y-direction. On an xz-section, the first foil collection portion 24 extends along the lamination direction (z-direction) of the electrode laminate body 22.

The film that constitutes the outer package body 30 is provided with the first opening portion OP1 at a position that faces the first side surface 22a1 of the electrode laminate body 22. The first opening OP1 is opened within a range in which the first foil collection portion 24 is disposed. At the first opening OP1, the first foil collection portion 24 is exposed to the exterior. A weld portion 71 is provided so as to surround the periphery of the first opening OP1. In FIG. 10 and FIG. 11, the weld portion 71 is shown by dot hatching. The weld portion 71 is a region where the outer package body 30 and the first foil collection portion 24 are connected by heat welding. The first opening OP1 is sealed by the weld portion 71.

Although not illustrated, the second foil collection portion 26 includes a bend portion 26a. Further, the second opening OP2 (not illustrated) is provided at a position that faces the second side surface 22a2 of the electrode laminate body 22. At the second opening OP2, the second foil collection portion 26 is exposed to the exterior. Further, a weld portion 72 (not illustrated) is disposed so as to surround the periphery of the second opening OP2.

An effect will be described. In the battery cell 10 in the embodiment 3, the first seal portion SE1 and the second seal portion SE2 can be excluded. Consequently, the first foil collection portion 24 and the second foil collection portion 26 can be configured so as not to protrude from the first side surface 22a1 and the second side surface 22a2. The dimension in the x-direction (that is, the lateral direction) can be further reduced.

### Modification of Embodiment 3

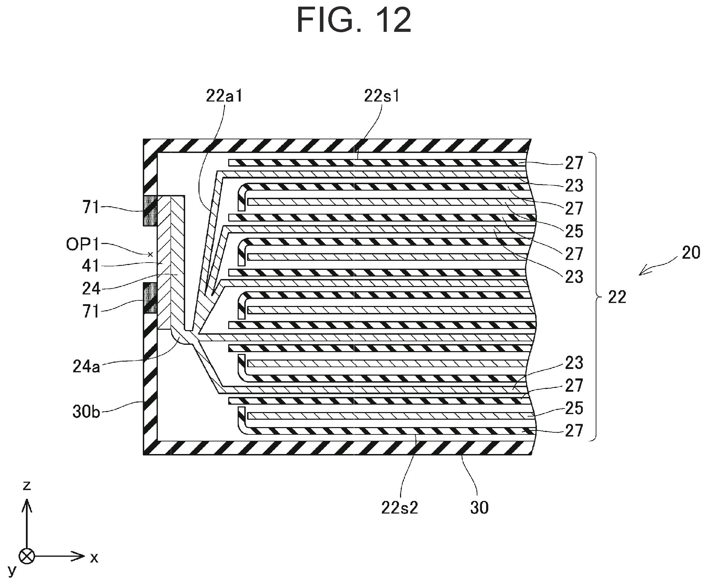

FIG. 12 shows a sectional view in a modification. FIG. 12 (modification) is different from FIG. 11 (embodiment 3) only in that a first electrode portion 41 is included. Only a portion unique to the modification will be described below. The first electrode portion 41 is joined to the surface of the first foil collection portion 24 on the -x-directional side. The first electrode portion 41 extends along the first foil collection portion 24 in the +z-direction. At the first opening OP1, a part of the first electrode portion 41 is exposed to the exterior. The second foil collection portion 26 can include a second electrode portion 42 (not illustrated) that has the same structure as the above-described first electrode portion 41.

An effect will be described. In the battery cell 10 in the modification, the electric connection with the exterior can be performed by the first electrode portion 41. Consequently, it is possible to enhance the strength and reliability of the site for the electric connection with the exterior. The second electrode portion 42 can exert the same effect.

### Other Modifications

In the above embodiments, the case where the first side surface 22a1 and the second side surface 22a2 are positioned in the shorter direction of the electrode laminate body 22 has been described, but the present disclosure is not limited to this form. The first side surface 22a1 and the second side surface 22a2 may be side surfaces in the longer direction of the electrode laminate body 22.

Each of the first electrode portion 41 and the second electrode portion 42 can have various shapes and structures, and for example, may be divided into a plurality of components.

In the embodiment 2 (FIG. 8 and FIG. 9), on the xz-section, the first foil collection portion 24 extends parallel to the lamination direction (that is, the z-direction) of the electrode laminate body 22. However, the first foil collection portion 24 may extend along a direction having a predetermined angle (for example, an angle of 45 degrees or less) with respect to the lamination direction.

The positive electrode current collection foil 23 is an example of the positive electrode sheet. The negative electrode current collection foil 25 is an example of the negative electrode sheet. The z-direction is an example of the lamination direction. The x-direction is an example of the direction crossing the lamination direction. The frame portions 34a, 36a constitute an example of the two peripheral edge portions.

The embodiments have been described above in detail. The embodiments are just examples, and do not limit the scope of the claims. The technology described in the claims includes various modifications and alterations of the above-described specific examples. The technical elements described in the present specification or the drawings exhibit technical utility independently or in various combinations, and are not limited to the combinations described in the claims at the time of the filing. Further, the technology exemplified in the present specification or the drawings concurrently achieves a plurality of purposes, and has technical utility simply by achieving one of the purposes.

## Claims

1. A battery cell (10) comprising:
a laminate body (22) having a structure in which a plurality of positive electrode sheets and a plurality of negative electrode sheets are alternately laminated, the laminate body (22) including a surface (22s1, 22s2) in a lamination direction and a side surface (22a1, 22a2) in a direction crossing the lamination direction;
a foil collection portion (24, 26) disposed on the side surface (22a1, 22a2), the foil collection portion (24, 26) being constituted such that the positive electrode sheets or the negative electrode sheets are bundled; and
an outer package body (30) constituted by a film material and housing the laminate body (22) and the foil collection portion (24, 26), wherein:
the film material that constitutes the outer package body (30) is provided with an opening (OP1, OP2) at a position that faces the side surface (22a1, 22a2) of the laminate body (22); and
the foil collection portion (24, 26) is exposed to an exterior, at the opening (OP1, OP2),
or
the foil collection portion (24, 26) is electrically connected with an electric conductor member (41, 42), and
the electric conductor member (41, 42) is exposed to the exterior, at the opening (OP1, OP2).

2. The battery cell (10) according to claim 1, wherein:
the outer package body (30) includes a seal portion (SE1, SE2) at a position that faces the side surface (22a1, 22a2) of the laminate body (22), the seal portion (SE1, SE2) being constituted such that two peripheral edge portions (34a, 36a) of the film material are joined to each other; and
the opening (OP1, OP2) is positioned at the seal portion (SE1, SE2).

3. The battery cell (10) according to claim 2, wherein:
the seal portion (SE1, SE2) extends in the direction crossing the lamination direction; and
the opening (OP1, OP2) is positioned at one of the two peripheral edge portions (34a, 36a) that constitute the seal portion (SE1, SE2).

4. The battery cell (10) according to claim 2, wherein:
the seal portion (SE1, SE2) is folded so as to extend along the side surface (22a1, 22a2) of the laminate body (22);
the seal portion (SE1, SE2) includes a first surface (SE1a) that faces the side surface (22a1, 22a2) and a second surface (SE1b) that is positioned on a side opposite to the first surface; and
the opening (OP1, OP2) is positioned at the second surface (SE1b) of the seal portion (SE1, SE2).

5. The battery cell (10) according to claim 1, wherein the foil collection portion (24, 26) is exposed to the exterior, at the opening (OP1, OP2).

6. The battery cell (10) according to claim 1, wherein the battery cell (10) includes an electrode portion as the electric conductor member (41, 42), the electrode portion being electrically connected with the foil collection portion (24, 26), a part of the electrode portion being exposed to the exterior from the opening (OP1, OP2) of the outer package body (30).

7. The battery cell (10) according to claim 1, wherein:
the outer package body (30) is provided with a weld region (71, 72) that is disposed so as to surround a periphery of the opening (OP1, OP2); and
at the weld region (71, 72), the outer package body (30) and the foil collection portion (24, 26) are welded, or the outer package body (30) and the electric conductor member (41, 42) are welded.
